# EUROPÄISCHE PATENTSCHRIFT

(11) **EP 2 338 132 B1**
(45) Veröffentlichungstag und Bekanntmachung des Hinweises auf die Patenterteilung: **15.08.2012**
(21) Anmeldenummer: 09796931.5
(22) Anmeldetag: 01.10.2009
(51) Int. Cl.: G06K 19/077, B32B 37/12, B42D 15/10

(54) **INLAY FÜR EIN SICHERHEITS- UND/ODER WERTDOKUMENT UND VERFAHREN ZU SEINER HERSTELLUNG**
INLAY FOR A SECURITY AND/OR VALUE DOCUMENT AND METHOD OF PRODUCING THE SAME
INLAY POUR DOCUMENT DE SÉCURITÉ ET/OU DE VALEUR ET MÉTHODE DE FABRICATION ASSOCIÉE

(30) Priorität: 21.10.2008 DE 102008052569
(43) Veröffentlichungstag der Anmeldung: 29.06.2011
(73) Patentinhaber: Bundesdruckerei GmbH, 10958 Berlin (DE)
(72) Erfinder: KNEBEL, Michael, 10405 Berlin (DE); KRÜGER, Per, 14197 Berlin (DE); EHREKE, Jens, 12587 Berlin (DE)
(74) Vertreter: Jungblut, Bernhard Jakob
(86) Internationale Anmeldenummer: PCT/DE2009/001361
(87) Internationale Veröffentlichungsnummer: WO 2010/045911

(56) Entgegenhaltungen:
- WO-A2-2010/023272
- DE-A1- 10 025 093

## Beschreibung

### Gebiet der Erfindung

Die Erfindung betrifft ein Inlay für ein Sicherheitsund/oder Wertdokument, mit einer Kernschicht, welche elektronische Bauteile und/oder diffraktive Sicherheitselemente, wie Volumenhologramme, enthält, und welche aus einem ersten Grundpolymer gebildet ist. Die Erfindung betrifft des weiteren ein Verfahren zur Herstellung eines solchen Inlays sowie die Verwendung eines solchen Inlays zur Herstellung eines Sicherheitsund/oder Wertdokumentes.

### Stand der Technik und Hintergrund der Erfindung.

Sicherheits- und/oder Wertdokumente, wie beispielsweise Personalausweise, Reisepässe, ID-Karten, Zugangskontrollausweise, Visa, Tickets, Führerscheine, Kraftfahrzeugpapiere, personalisierte Wertpapiere Kreditkarten, oder personalisierte Chipkarten, weisen zunehmend elektronische Schaltkreise, und sonstige aktive und passive elektronische Bauelemente, wie beispielsweise integrierter Halbleiter (ICs), aber auch von Chipmodulen, Displays, Batterien, Spulen, Kondensatoren, Kontaktstellen, usw., auf.

Bei der Einbringung solcher Bauteile in einem Kartenverbund ergibt sich beispielsweise bei gedünnten Halbleiterstrukturen das Problem der vorzeitigen Zerstörung oder Beeinträchtigung der Lebensdauer des Bauteils während der Lamination durch thermische und mechanische Überlastung bzw. Belastung. Bei bekannten Verfahren, beispielsweise zur Fertigung von Polycarbonat (PC)-Smart-Cards im Wege des Laminierens einzelner FolienLagen, erfolgt eine Positionierung einer PC-Folie direkt über dem Chip. Bei der industriell etablierten Vorgehensweise werden die vorbereiteten Kartenaufbauten und gleichzeitiger Einwirkung von Temperatur und Druck zu einem "quasi-monolithischen" Block zusammengepresst. Da PC aufgrund seines spezifischen Wärmeübergangskoeffizienten sowie seiner relativ hohen Glastemperatur Tg nicht sofort erweicht, herrscht direkt am Chip einer erhöhter mechanischer Druck, der zur mechanischen Zerstörung des Chips führen könnte.

Zur Vermeidung dieses Problems ist es bekannt, auf die elektronischen Bauteile selbstklebende bzw. elastische Folien aufzubringen, wodurch die PC-Folien mit zwischengelegten Bauteilen, wie Chips, ohne hohes Zerstörungsrisiko für das Bauteil zu einer Karte zusammengefügt werden können. In der Regel sind diese Adhäsivschichten allerdings ein Schwachpunkt des Kartenaufbaus. Denn über die Kartenkante können leichter Wasserdampf und Luft hinein diffundieren und somit zu einer nachträglichen Delamination führen. Auch andere Umwelteinflüsse, insbesondere hohe Temperaturen, aber auch schnelle Temperaturwechsel können dazu führen, dass die Karte auf gespaltet und damit nicht mehr brauchbar wird. Darüber hinaus sind Selbstklebefolien mit einer Dicke < 50 µm im industriellen Maßstab schwer bis gar nicht mehr handhabbar und unflexibel, wenn es z.B. darum geht, Kavitäten auszufüllen. Ähnliches gilt für Bauteile mit diffraktiven Strukturen, z.B. Volumen-Hologramme. Wird das Hologramm direkt mit weiteren PC Folien zu einer Karte laminiert, erfolgt dies in bestimmten Fällen unter visuell und maschinell quantifizierbaren Einbußen der Darstellungsqualität des Hologramms, insbesondere der Farben und des 3-dimensionalen Erscheinungsbildes. Die meisten Volumenhologramme auf Photopolymer-Basis besitzen nämlich einen Erweichungspunkt bzw. eine Glastemperatur T_{g} von deutlich unter 150 °C. Werden während des Laminierens die zu Beginn noch harten PC-Folien auf das weiche Photopolymer des Hologramms gepresst, so versetzen sich die Bragg-Ebenen und bestimmte Elemente erscheinen wellenlängenverschoben. Zum Beispiel werden aus grünen Bildelementen gelbe Bildelemente, etc. Gerade bei Volumenhologrammen wird zudem der 3-dimensionale Eindruck deutlich gemindert und die Hologramme erscheinen eher flach und zweidimensional sowie verwaschen. Auch diese Effekte beruhen auf dem Problem, dass das "harte" PC entweder auf spröde Flächen trifft und mechanischen Stress hervorruft oder weichere Körper, beispielsweise aus einem Photopolymer, verformt, wodurch diese Bauteile in Ihrer Funktion beeinträchtigt sind.

Diese Bauteile können zum Schutz vor mechanischen Belastungen bei der Laminierung auch in einem sogenannten Inlay angeordnet werden, welches beispielsweise als relativ dicke Schicht aus einem vergleichsweise weichen Polymerwerkstoff, beispielsweise einem thermoplastischen Elastomer (TPE), ausgebildet ist. Ein solches Inlay umfasst des Weiteren mitunter einseitig oder beidseitig aufgebrachte Deckschichten. Das Inlay wird nach seiner Herstellung dann mit weiteren Schichten des Dokumentes aus einem Polymerwerkstoff, wie Polycarbonat (PC) und/oder einem Papierwerkstoff und Druckschichten, verbunden bzw. laminiert, wodurch das fertige Sicherheits- und/oder Wertdokument gebildet wird (welches dann meist noch individualisiert bzw. personalisiert werden muss). Dabei werden typischerweise Adhäsivlagen beidseitig des TPE Werkstoffes eingesetzt, was die bereits vorstehend angesprochene Gefahr der Delamination mit sich bringt. Es besteht folglich ein erhöhtes Fälschungs- und/oder Manipulationsrisiko, da das Inlay u.U. zerstörungsfrei herausgelöst und in einen anderen Schichtverbund, einer Fälschung, eingebaut werden kann. Zudem können Daten, die das Inlay trägt oder enthält, manipuliert werden.

Inlays aus TPE Werkstoffen schützen zwar die integrierten Bauteile zuverlässig vor mechanischer Beschädigung, haben jedoch neben der vorstehend bereits angesprochenen Problematik auch der bei der Verarbeitung, insbesondere dem Vereinzeln von Inlay Stapeln, Nachteile, da solche Inlays materialbedingt zum Verblocken neigen. Diese Neigung zum Verblocken ist auch bei der passgenauen Ausrichtung der Inlays beim Zusammentragen des Inlays und weiterer Folien zum fertigen Folienverbund problematisch.

Aus anderen technologischen Bereichen sind latent-reaktive Klebstoffe bekannt, wozu lediglich beispielsweise auf die Literaturstelle EP 0 922 720 A1 verwiesen wird.

Aus der DE 100 25 093 A1 ist ein Sicherheitsdokument mit einer ein elektronisches Bauteil enthaltenden Kernschicht und einer Deckschicht auf jeder Seite der Kernschicht bekannt, wobei die Kernschicht und die Deckschichten aus einem Polymer gebildet und mittels eines latent-reaktiven Klebstoffes miteinander verbunden sind.

Ferner ist aus der WO 2010/023272 A2, welche eine Zwischendruckschrift im Sinne des Artikels 54(3) EPÜ ist, ein Inlay bekannt, welches einen ein elektronisches Bauteil enthaltenden Träger und eine Deckschicht aufweist, wobei ein Polyisocyanat als Klebstoff verwendet und der Träger und die Deckschicht aus unterschiedlichen Materialien gebildet sein können.

### Technisches Problem der Erfindung

Der Erfindung liegt daher das technische Problem zu Grunde, ein Inlay anzugeben, welches einerseits besser verarbeitbar ist, insbesondere nicht zum Verblocken neigt, und andererseits ein geringeres Delaminationsrisiko aufweist.

### Grundzüge der Erfindung und bevorzugte Ausführungsformen

Zur Lösung dieses technischen Problems lehrt die Erfindung den fegustand des Anspruchs 1.

Latent-reaktive Klebstoffe sind an sich in vielfältiger Weise bekannt. Hierzu wird beispielsweise auf die Literaturstellen EP 0 922 720, verwiesen, auf deren Offenbarungsgehalt hiermit ausdrücklich Bezug genommen wird. Es handelt sich typischerweise um PolyisocyanatPartikel, beispielsweise in einer Dispersion, welche oberflächendesaktiviert sind. Eine solche Dispersion kann auf mit dem Polyisocyanat reaktive Substanzen, wie niedermolekulare Di-, Tri-, oder Polyole, oder polymere Di-, Tri-, oder Polyole enthalten. Eine Schicht aus einem solchem Klebstoff kann als solche bereits adhäsive Wirkung haben. Wesentlich ist aber, dass bei Erwärmung der Schicht über eine Reaktionstemperatur Tᵣ das Isocyanat wieder aktiviert wird und mit anderen funktionellen Gruppen im Klebstoff, aber insbesondere auch in Polymeren, mit welchen der Klebstoff in Kontakt ist, reagiert und so eine stoffschlüssige und nicht ohne weiteres lösbare Verbindung bildet.

Die desaktivierten Polyisocyanate weisen Reaktionstemperaturen im Bereich von 30°C bis 180°C, insbesondere 40°C bis 150°C, auf. Deren Schmelzpunkte liegen im Bereich von 40°C bis 150°C.

Als Polyisocyanate (dieser Begriff schließt auch Diisocyanate ein) sind aliphatische, cycloaliphatische, heterocyclische oder aromatische Polyisocyanate geeignet, beispielsweise Diphenylmethan-4,4'-diisocyanat, Naphthalin-1,5-diisocyanat, 3,3'-Dimethyl-biphenyl-4,4'-diisocyanat, dimeres 1-Methyl-2,4-phenylen-diisocyanat, 3,3'-Diisocyanato-4,4'-dimethyl-N,N'-diphenylharnstoff, Additionsprodukt von 2 Mol 1-Methyl-2,4-phenylendiisocyanat mit 1 Mol 1,2-Ethandiol, 1,4-Butandiol, 1,4-Cyclohexan-di-methanol, oder Ethanolamin, das Isocyanurat des IPDI. Im Falle der genannten Additionsprodukte liegt die Reaktionstemperatur unter 90°C.

Als Reaktionspartner der Polyisocyanate kommen wasserlösliche oder wasserdispergierbare Emulsions- oder Dispersionspolymere in Frage, welche isocyanatreaktive Gruppen, wie beispielsweise Hydroxyl-, Amino-, Carboxyl-, oder Carbonamid-Gruppen, tragen. Bei diesen Polymeren ist der Anteil an Monomeren mit isocyanatreaktiven Gruppen typischerweise im Bereich von 0,2 bis 15 Gew.-%, insbesondere 1 bis 8 Gew.-%, bezogen auf das Polymer. Beispiele geeigneter Monomere sind: Allylalkohol, Hydroxyethyl- oder Hydroxypropyl-acrylat und -methacrylat, Butandiol-monoacrylat, ethoxylierte oder propoxylierte Acrylate, oder Methacrylate, N-Methylol-acrylamid, tert. Butylamino-ethyl-methacrylat, Acryl- und Methacrylsäure, Maleinsäure, Malleinsäure-monoester. Des Weiteren ist die Copolymerisation von Glycidylmethacrylat und/oder Allylglycidylether möglich. Diese enthalten eine Epoxygruppe, die in einem weiteren Schritt mit Aminen oder Aminoalkoholen zum sekundären Amin derivatisiert wird, beispielsweise mit Ethylamin, Ethylhexylamin, Isononylamin, Anilin, Toluidin, Xylidin, Benzylamin, Ethanolamin, 3-Amino-1-propanol, 1-Amino-2-propanol, 5-Amino-1-pentanol, 6-Amino-1-hexanol, 2-(2-Aminoethoxy)ethanol. Geeignet sind auch wasserlösliche Bindemittel, wie Polyvinylalkohol, teilverseiftes Polyvinylacetat, Hydroxyethylcellulose, Hydroxypropylcellulose, oder auch wasserdispergierbare hydroxyfunktionelle Polyester, hydroxyfunktionelle Sulfopolyester, und Polyurethandispersionen, Dispersionen von Polyamidoaminen, welche Carboxyl- Hydroxlprimäre oder sekundäre Aminogruppen tragen. Ebenso können wässrige kolloidale Dispersionen oder kolloidale Lösungen mit Teilchengrößen zwischen 1 und 100 nm auf Basis thermoplastischer Polymere mit isocyanatreaktiven Gruppen, wie beispielsweise (höhermolekulare) feste Epoxyharze, Poly-ethylen-vinylalkohol oder Poly-ethylen-co-acrylsäure.

Das Verhältnis der Isocyanatgruppen zur Summe der isocynatreaktiven Gruppen, wie Hydroxy- oder Amino-, liegt zweckmäßigerweise im Bereich 0,1 bis 1,5.

Als Mittel zur Oberflächendesaktivierung der einzusetzenden Polyisocyanatpartikel kommen primäre und sekundäre aliphatische Amine, Di- oder Polyamine, Hydrazinderivate, Aminiden, Guanidinen, wie beispielsweise Ethylendiamin, 1,3-Propylendiamin, Diethylentriamin, Triethylentetramin, 2,5-Dimethylpiperazin, Methylnonandiamin, Isophorondiamin, 4,4'-Diaminodiecyclohexylmethan, Diamino- und Triaminopolypropylenether, Polyamindoamine und Gemische von Mon- Di-, und/oder Polyaminen, in Frage. Die Konzentration des Desaktivierungmittels soll 0,1 bis 25, insbesondere 0,5 bis 8 Equivalentprozent, bezogen auf die total vorhandenen Isocyanatgruppen. Die Polyisocyanatpartikel können vor, während oder nach dem Vermahlen auf eine Partikelgröße von beispielsweise unter 500 µm, insbesondere unter 100 µm, vorzugsweise unter 50 µm, oberflächendesaktiviert werden durch Umsatz mit dem Desaktivierungsmittel.

Das Vermahlen der Polyisocyanatpartikel (vor der Mischung mit dem (Bindemittel-) Polymer erfolgt beispielsweise mittels eines Dissolvers, Dispergiergeräten vom Rotor-Stator-Typ, Rührwerkskugelmühlen, Perl- und Sandmühlen, Kugelmühlen, oder Reibspaltmühlen bei Temperaturen von vorzugsweise weniger als 40°C.

Der Klebstoff kann des Weiteren Katalysatoren enthalten, welche die Oberflächendesaktivierung bzw. Reaktivierung und/oder die Vernetzungsreaktion des Polyisocyanats mit dem Polymer steuern. Es handelt sich vorzugsweise um hydrolysenstabile Katalysatoren, welche die wärmeaktivierte Vernetzungsreaktion beschleunigen, wie beispielsweise die in der Urethankatalyse bekannten organischen Zinn-, Eisen-, Blei-, Kobalt-, Bismuth-, Antimon-, oder Zinkverbindungen oder ihre Mischungen. Bevorzugt sind Alkylmercaptidverbindungen des Dibutylzinns. Die Menge an Katalysator liegt zweckmäßigerweise 0,0001 bis 3 Gew.-%, insbesondere 0,01 bis 1 Gew.-%, bezogen auf die Summe aus Polyisocyanat und Polymer.

Der Klebstoff kann schließlich fachübliche inerte Zusätze, wie Netzmittel, organische oder anorganische Verdickungsmittel, Weichmacher, Füllstoffe, Kunststoffpulver, Pigmente, Farbstoffe, UV-Stabilisatoren, Radikalfänger, Korrosionsschutzmittel, Flammschutzmittel, Treibmittel, und/oder inerte organische Lösemittel, enthalten.

Mit der Erfindung wird zum ersten erreicht, dass ein Inlay geschaffen wird, welches durch geeignete Wahl des zweiten Grundpolymers keine Verblockungsneigung mehr hat, i.e. leicht förderbar, vereinzelbar und ausrichtbar ist. Dadurch ist die Verarbeitbarkeit in einem Gesamtprozess zur Herstellung von Sicherheits- und/oder Wertdokumenten verbessert. Des Weiteren ist erreicht, dass sich die Kernschicht sicher und unlösbar in ein Sicherheitsund/oder Wertdokument integrieren lässt, da für die Inlaydeckschichten ein mit dem Grundpolymer weiterer Polymerschichten laminationskompatibles Grundpolymer ausgewählt werden kann.

Die Kernschicht set gebildet aus einem thermoplastischen Elastomer, insbesondere ausgewählt aus der Gruppe bestehend aus "thermoplastische Elastomere auf Olefinbasis (TPO), vorwiegend PP/EPDM, z.B. Santoprene, vernetzte thermoplastische Elastomere auf Olefinbasis (TPV), z.B. PP/EPDM, z.B. Sarlink (DSM), thermoplastische Elastomere auf Urethanbasis (TPU), z.B. Desmopan, Texin, (Bayer), thermoplastische Copolyester (TPE), z.B. Hytrel (DuPont), Styrol-Blockcopolymere (SBS, SEBS, SEPS, SEEPS und MBS) z.B. Septon (Kuraray) oder Thermolast K (Kraiburg TPE), thermoplastische Copolyamide, z.B. PEBA". Es sind aber auch thermoplastische Polymere mit vergleichsweise hoher Plastizität einsetzbar.

Die Inlaydeckschichten können gleich oder verschieden sein und aus einem Grundpolymer ausgewählt aus der Gruppe bestehend aus "PC (Polycarbonat, insbesondere Bisphenol A Polycarbonat), PET (Polyethylenglykolterephthalat), PET-G, PET-F, PMMA (Polymethylmethacrylat), ABS (Acrylnitril-Butadien-Styrol), PE (Polyethylen), PP (Polypropylen), PI (Polyimid oder Poly-trans-Isopren), PVC (Polyvinylchlorid) und Copolymere solcher Polymere" gebildet sein.

Bevorzugt ist es, wenn die Inlaydeckschichten aus einem PC gebildet sind.

Die Kernschicht hat typischerweise eine Dicke von 100 - 600 µm, vorzugsweise von 200 - 400 µm. Die Inlaydeckschichten haben typischerweise, gleich oder verschieden, eine Dicke von 30 - 250 µm, vorzugsweise 30 - 150 µm.

Eine der Inlaydeckschichten kann eine Ausnehmung aufweisen oder beide Inlaydeckschichten können Ausnehmungen aufweisen.

Eine der Inlaydeckschichten kann auf der der Kernschicht zugewandten Seite und/oder auf der der Kernschicht abgewandten Seite ganzflächig oder teilflächig eine Druckschicht unmittelbar tragen oder beide Inlaydeckschichten können jeweils auf der der Kernschicht zugewandten Seite und/oder auf der der Kernschicht abgewandten Seite ganzflächig oder teilflächig eine Druckschicht unmittelbar tragen. Als Druckschichten kommen alle im Bereich der Sicherheits- und/oder Wertdokumente fachüblichen Druckschichten in Frage.

Die Erfindung betrifft auch ein Verfahren zur Herstellung eines erfindungsgemäßen Inlays mit den folgenden Verfahrensschritten: a) es wird eine Kernschicht mit eingebetteten elektronischen Bauteilen und/oder diffraktiven Elementen hergestellt, b) auf die Kernschicht und/oder auf eine Seite der Inlaydeckschichten, optional nach Bedruckung zumindest einer der Inlaydeckschichten, wird ein latent-reaktiver Klebstoff aufgetragen, und c) die Kernschicht und die Deckschichten werden zusammengefügt und miteinander verklebt, wobei der Verbund auf Kernschicht und Deckschichten optional auf eine Temperatur erwärmt werden, welche oberhalb einer Reaktionstemperatur Tᵣ des latent-reaktiven Klebstoffes liegt. Die Erwärmung kann für eine Dauer von 1 - 1000 s, insbesondere 5 bis 60 s, erfolgen. Die Erwärmung ist jedenfalls dann entbehrlich, wenn der latent-reaktive Klebstoff bereits bei Raumtemperatur adhäsive Eigenschaften aufweist. Dann erfolgt die reaktive Verklebung erst im Zuge des Laminierens, wobei ohnehin eine Erwärmung auf eine Temperatur oberhalb Tᵣ erwärmt wird. Insbesondere dann ist es vorteilhaft, wenn Tᵣ im Bereich von 40 - 230 °C, vorzugsweise im Bereich von 50 - 120 °C liegt.

Schließlich betrifft die Erfindung die Verwendung eines erfindungsgemäßen Inlays zur Herstellung eines Sicherheits- und/oder Wertdokumentes, wobei das Inlay mit einer Mehrzahl von Polymerschichten einlaminiert wird, wobei die Polymerschichten vorzugsweise aus dem gleichen Grundpolymer gebildet sind, wie die Inlaydeckschichten. Die weiteren Polymerschichten können Druckschichten und/oder Sicherheitsmerkmale, wie beispielsweise diffraktive Elemente tragen oder enthalten.

Das Laminieren erfolgt typischerweise bei Temperaturen im Bereich von 100 - 230 °C, insbesondere 170 - 210 °C, für eine Dauer von 1 bis 240 min., insbesondere 5 - 60 min., bei einem Druck von 0 - 400 N/cm², insbesondere 10 - 200 N/cm², und optional unter Vakuum im Bereich von 2 - 2000 mbar.

Im Einzelnen ist zum Laminierungsvorgang folgendes anzumerken. Grundsätzlich geht dem Laminierungsvorgang der Schritt des Zusammentragens der verschiedenen Polymerschichten voraus. Das Zusammentragen kann in allen fachüblichen Weisen kontinuierlich, quasikontinuierlich oder diskontinuierlich erfolgen. Bei einer sogenannten Rolle zu Rolle Produktion (kontinuierliches Zusammentragen) können alle Polymerschichten, einschließlich Inlay, parallel zueinander geführt werden, so dass nur beim Einlegen einer Rolle auf eine Passgenauigkeit aller Bahnen geachtet werden muss. Nach dem Einlegen und Anfahren erfolgt eine automatisierte Überwachung der Laufgenauigkeit der Bahnen und automatische Korrektur, so dass die verschiedenen Polymerschichten stets in vorgegebener, definierter Position zueinander laufen. Anschließend erfolgt eine Lamination der zueinander pösitionierten Bahnen, wobei sich die Rollenlamination als besonders effiziente und schnelle Verfahrensweise anbietet. Alternativ kann mit der Bogenlamination (diskontinuierliches Zusammentragen) gearbeitet werden. Dabei enthält ein Bogen verschiedene Bereiche einer Polymerschicht, welche verschiedenen Sicherheits- und/oder Wertdokumenten zugeordnet sind, oder besteht daraus. Schließlich kann mit Dokumenten-weiser Einzel-Lamination gearbeitet werden. Dabei können beispielsweise elektronische Schaltungen auf Funktion und Druckschichten auf Fehlerfreiheit geprüft werden, und zwar bevor die betreffenden Polymerschichten zusammengetragen werden. Dadurch wird Ausschuss minimiert, da nur geprüfte Polymerschichten zueinander getragen und dann miteinander zusammengefügt werden. Es entfällt die Notwendigkeit alle Polymerschichten nachzufertigen, sollte eine der Polymerschichten fehlerhaft sein. Beim quasikontinuierlichen Zusammentragen werden einzelne Lagen des Polymerschichtverbundes an einer Position zusammengeführt. Die Besonderheit liegt darin, dass die Zuführung sowohl von Rolle als auch Einzelbogen eines Stapels erfolgen kann und dass nicht nur streng parallel sondern auch über kreuz gearbeitet werden kann. In einer weiteren Verfahrensweise erfolgt das Zusammentragen in einer kombinierten Rolle-zu-Rolle- und Bogenverarbeitung. Hier kann das Inlay als Bogen und die weiteren Polymerschichten von der Rolle zugeführt werden. Beim Zusammenfügen bzw. Laminieren werden die verschiedenen Polymerschichten zu einem monolithischen Verbund verbunden.

Grundsätzlich sind als Werkstoffe für die Inlaydeckschichten und die weiteren Polymerschichten alle im Bereich der Sicherheits- und/oder Wertdokumente üblichen Polymerwerkstoffe einsetzbar. Die weiteren Polymerschichten können, gleich oder verschieden, auf Basis eines Polymerwerkstoffes aus der Gruppe bestehend aus "PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren), PVC (Polyvinylchlorid) und Copolymere solcher Polymere" gebildet sein. Bevorzugt ist der Einsatz von PC-Werkstoffen, wobei beispielsweise für die weiteren Polymerschichten, aber auch die Inlaydeckschichten, insbesondere sogenannte nieder-T_{g}-Werkstoffe einsetzbar sind. Nieder-T_{g}-Werkstoffe sind Polymere, deren Glastemperatur unterhalb von 140 °C liegt. Bevorzugt ist es dabei, wenn die Inlaydeckschichten und die weiteren Polymerschichten aus gleichen oder verschiedenen Polymeren gebildet sind, wobei zumindest das Grundpolymer der Inlaydeckschichten, vorzugsweise auch das Grundpolymer der unmittelbar benachbarten weiteren Polymerschichten, gleiche oder verschiedene miteinander reaktive Gruppen enthält, wobei bei einer Laminiertemperatur von weniger als 200°C reaktive Gruppen der Inlaydeckschichten miteinander und/oder mit reaktiven Gruppen der weiteren Polymerschichten reagieren und eine kovalente Bindung miteinander eingehen. Dadurch kann die Laminiertemperatur herabgesetzt werden kann, ohne dass dadurch der innige Verbund der laminierten Schichten gefährdet wird. Dies liegt daran, dass die verschiedenen Polymerschichten auf Grund der Reaktion der jeweiligen reaktiven Gruppen nicht mehr ohne weiteres delaminiert werden können. Denn es findet zwischen den Schichten eine reaktive Kopplung statt, gleichsam ein reaktives Laminieren. Zum Zweiten wird ermöglicht, dass wegen der niedrigeren Laminiertemperatur die thermische Belastung der elektronische Bauteile verringert wird. Die Auswahl der geeigneten reaktiven Gruppen für die jeweiligen Grundpolymere ist für den Fachmann für Polymerchemie unschwer möglich. Beispielhafte reaktiven Gruppen sind ausgewählt aus der Gruppe bestehend aus "-CN, -OCN, -NCO, -NC, -SH, -Sₓ, -Tos, -SCN, -NCS, -H, Epoxy (-CHOCH₂), -NH₂, -NN⁺, -NN-R, -OH, -COOH, -CHO, -COOR, -Hal (-F, -Cl, -Br, -I), -Me-Hal (Me = zumindest zweiwertiges Metall, beispielsweise Mg), -Si(OR)₃, -SiHal₃, -CH=CH₂, und -COR", wobei R eine beliebige reaktive oder nicht-reaktive Gruppe sein kann, beispielsweise -H, -Hal, C₁-C₂₀-Alkyl, C₃-C₂₀-Aryl, C₄-C₂₀-ArAlkyl, jeweils verzweigt oder linear, gesättigt oder ungesättigt, optional substituiert, oder korrespondierende Heterozyklen mit einem oder mehreren gleichen oder verschiedenen Heteroatomen N, O, oder S". Andere reaktive Gruppen sind selbstverständlich möglich. Hierzu gehören die Reaktionspartner der Diels-Alder Reaktion oder einer Metathese. Die reaktiven Gruppen können direkt an dem Grundpolymer gebunden oder über eine Spacergruppe mit dem Grundpolymer verbunden sein. Als Spacergruppen kommen alle dem Fachmann für Polymerchemie bekannten Spacergruppen in Frage. Dabei können die Spacergruppen auch Oligomere oder Polymere sein, welche Elastizität vermitteln, wodurch eine Bruchgefahr des Sicherheits- und/oder Wertdokuments reduziert wird. Solche elastizitätsvermittelnde Spacergruppen sind dem Fachmann wohl vertraut und brauchen daher hier nicht weiter beschrieben zu werden. Lediglich beispielhaft seien Spacergruppen genannt, welche ausgewählt sind aus der Gruppe bestehend aus "-(CH₂)ₙ-, -(CH₂-CH₂-O)ₙ-, -(SiR₂-O)ₙ-, -(C₆H₄)ₙ-, -(C₆H₁₀)n-, C₁-Cₙ-Alkyl, C₃-C₍ₙ₊₃₎-Aryl, C₄-C₍ₙ₊₄₎-ArAlkyl, jeweils verzweigt oder linear, gesättigt oder ungesättigt, optional substituiert, oder korrespondierende Heterozyklen mit einem oder mehreren , gleichen oder verschiedenen Heteroatomen O, N, oder S" mit n=1 bis 20, vorzugsweise 1 bis 10. Bezüglich weiterer reaktiver Gruppen oder Möglichkeiten der Modifikation wird auf die Literaturstelle "Ullmann's Encyclopaedia of Industrial Chemistry", Wiley Verlag, elektronische Ausgabe 2007, verwiesen. Der Begriff des Grundpolymers bezeichnet im Rahmen der vorstehenden Ausführungen eine Polymerstruktur, welche keine unter den eingesetzten Laminierbedingungen reaktive Gruppen trägt. Es kann sich dabei um Homopolymere oder Copolymere handeln. Es sind auch gegenüber den genannten Polymere modifizierte Polymere umfasst.

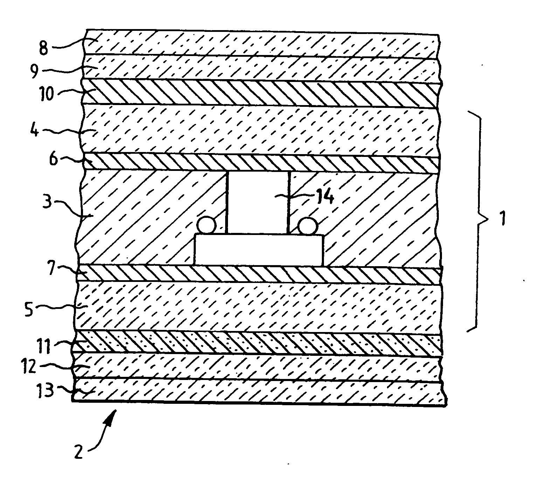

Im Folgenden wird die Erfindung anhand einer lediglich eine Ausführungsformen darstellenden Figur 1 näher erläutert. Sie zeigt eine schematische Darstellung eines erfindungsgemäß hergestellten Sicherheits- und/oder Wertdokumentes.

Man erkennt eine Kernschicht 3, in welche elektronische Bauteile, beispielsweise eine Transponderschaltkreis mit Antenne, integriert ist. Die Kernschicht 3 besteht aus einem thermoplastischen Elastomer, beispielsweise ausgewählt aus der Gruppe bestehend aus thermoplastische Elastomere auf Olefinbasis (TPO), vorwiegend PP/EPDM, z.B. Santoprene, vernetzte thermoplastische Elastomere auf Olefinbasis (TPV), z.B. PP/EPDM, z.B. Sarlink (DSM), thermoplastische Elastomere auf Urethanbasis (TPU), z.B. Desmopan, Texin, (Bayer), thermoplastische Copolyester (TPE), z.B. Hytrel (DuPont), Styrol-Blockcopolymere (SBS, SEBS, SEPS, SEEPS und MBS) z.B. Septon (Kuraray) oder Thermolast K (Kraiburg TPE), thermoplastische Copolyamide, z.B. PEBA. Des Weiteren sind beidseitig der Kernschicht 3 Inlaydeckschichten 4, 5 eingerichtet, welche über zwei Schichten 6, 7 aus einem latent-reaktiven Klebstoff verbunden sind. Die Inlaydeckschichten 4, 5 sind im Beispiel aus einem Polycarbonat gebildet. Dieser Schichtverbund bilden das Inlay 1, welches vorgefertigt wird.

Das vorgefertigte Inlay 1 ist dann in weitere Polymerschichten 8, 9, 10, 11, 12, 13 einlaminiert worden, welche ebenfalls aus einem Polycarbonat gebildet sind.

Da die Oberflächen des Inlays 1 aus Polycarbonat gebildet sind, neigt das Inlay 1 nicht zum Verblocken und alle üblichen Technologien zur Zusammenführung von Inlay 1 und den weiteren Polymerschichten 8, 9, 10, 11, 12, 13 können problemlos eingesetzt werden. Durch den Einsatz des latent-reaktiven Klebstoffes sind die Inlaydeckschichten 4, 5 mit der Kernschicht 3 stoffschlüssig verbunden, so dass letztendlich ein monolithisches Sicherheits- und/oder Wertdokument 2 erhalten wird.

Im Folgenden wird die Herstellung eines erfindungsgemäß eingesetzten Klebstoffes beschrieben. Mit 106 Gewichtsteilen Wasser, 33 Gewichtsteilen Kelzan S, 3% Lösung in Wasser (Monsanto), 1 Gewichtsteil Polyoxyethylensorbitantrioleat, 2 - 6 Gewichtsteilen Polyamin (Euretek 505 (Witco), ein Polyamindoamin und/oder Jeffamin T-403 (Huntsman), einem Aminoterminiertes Polyoxypropylen) und 80 Gewichtsteilen Polyisocyanatpulver (Partikelgröße kleiner 45 µm) wird in einem Dissolver eine wäßrige Suspension hergestellt. Als Polyisocyanat kommt beispielsweise das IPDI-Isocyanurat (IPDI-T 1890/100, Hüls) in Frage. Aber auch die anderen vorstehend genannten Polyisocyanate können eingesetzt werden.

## Patentansprüche

1. Inlay (1) für ein Sicherheits- und/oder Wertdokument (2)
mit einer Kernschicht (3), welche elektronische Bauteile (4) und/oder diffraktive Sicherheitselemente enthält, und welche aus einem ersten Grundpolymer gebildet ist, wobei das erste Grundpolymer ein thermoplastisches Elastomer ist,
mit zwei beidseitig der Kernschicht (3) angeordneten Inlaydeckschichten (4, 5), welche aus einem zweiten Grundpolymer, welches verschieden von dem ersten Grundpolymer ist, gebildet sind,
wobei die Kernschicht (3) und die Inlaydeckschichten (4, 5) mittels eines latent-reaktiven Klebstoffes (6, 7) miteinander verbunden sind.

2. Inlay (1) nach Anspruch 1, wobei die Kernschicht (3) aus einem Grundpolymer ausgewählt aus der Gruppe bestehend aus "thermoplastische Elastomere auf Olefinbasis (TPO), vorwiegend PP/EPDM, z.B. Santoprene, vernetzte thermoplastische Elastomere auf Olefinbasis (TPV), z.B. PP/EPDM, z.B. Sarlink (DSM), thermoplastische Elastomere auf Urethanbasis (TPU), z.B. Desmopan, Texin, (Bayer), thermoplastische Copolyester (TPE), z.B. Hytrel (DuPont), Styrol-Blockcopolymere (SBS, SEBS, SEPS, SEEPS und MBS) z.B. Septon (Kuraray) oder Thermolast K (Kraiburg TPE), thermoplastische Copolyamide, z.B. PEBA", gebildet ist.

3. Inlay (1) nach Anspruch 1 oder 2, wobei die Inlaydeckschichten (4, 5) aus einem Grundpolymer ausgewählt aus der Gruppe bestehend aus "PC (Polycarbonat, insbesondere Bisphenol A Polycarbonat), PET (Polyethylenglykolterephthalat), PET-G, PET-F, PMMA (Polymethylmethacrylat), ABS (Acrylnitril-Butadien-Styrol), PE (Polyethylen), PP (Polypropylen), PI (Polyimid oder Poly-trans-Isopren), PVC (Polyvinylchlorid) und Copolymere solcher Polymere" gebildet sind.

4. Inlay (1) nach einem der Ansprüche 1 bis 3, wobei die Kernschicht (3) eine Dicke von 100 - 600 µm, vorzugsweise von 200 - 400 µm, aufweist.

5. Inlay (1) nach einem der Ansprüche 1 bis 4, wobei die Inlaydeckschichten (4, 5) eine Dicke von 30 - 250 µm, vorzugsweise 30 - 150 µm, aufweisen.

6. Inlay (1) nach einem der Ansprüche 1 bis 5, wobei eine der Inlaydeckschichten (4, 5) eine Ausnehmung aufweist oder wobei beide Inlaydeckschichten (4, 5) Ausnehmungen aufweisen.

7. Inlay (1) nach einem der Ansprüche 1 bis 6, wobei eine der Inlaydeckschichten (4, 5) auf der der Kernschicht (3) zugewandten Seite und/oder auf der der Kernschicht (3) abgewandten Seite ganzflächig oder teilflächig eine Druckschicht unmittelbar trägt oder wobei beide Inlaydeckschichten (4, 5) jeweils auf der der Kernschicht (3) zugewandten Seite und/oder auf der der Kernschicht (3) abgewandten Seite ganzflächig oder teilflächig eine Druckschicht unmittelbar tragen.

8. Verfahren zur Herstellung eines Inlays (1) nach einem der Ansprüche 1 bis 7 mit den folgenden Verfahrensschritten:
a) es wird eine Kernschicht (3) mit eingebetteten elektronischen Bauteilen (4) und/oder diffraktiven Elementen hergestellt,
b) auf die Kernschicht (3) und/oder auf eine Seite der Inlaydeckschichten (4, 5), optional nach Bedruckung zumindest einer der Inlaydeckschichten (4, 5), wird ein latent-reaktiver Klebstoff (5, 6) aufgetragen, und
c) die Kernschicht (3) und die Inlaydeckschichten (4, 5) werden zusammengefügt und miteinander verklebt, wobei der Verbund aus Kernschicht (3) und Inlaydeckschichten (4, 5) optional auf eine Temperatur erwärmt werden, welche oberhalb einer Reaktionstemperatur Tᵣ des latent-reaktiven Klebstoffes liegt.

9. Verwendung eines Inlays (1) nach einem der Ansprüche 1 bis 7 in einem Verfahren zur Herstellung eines Sicherheits- und/oder Wertdokumentes (2), wobei das Inlay (1) mit einer Mehrzahl von Polymerschichten (8, 9, 10, 11, 12, 13) laminiert wird, wobei die Polymerschichten (8, 9, 10, 11, 12, 13) vorzugsweise aus dem gleichen Grundpolymer gebildet sind, wie die Inlaydeckschichten (4, 5).

10. Verwendung nach Anspruch 9, wobei das Laminieren bei Temperaturen im Bereich von 100 - 230 °C, insbesondere 170 - 210 °C, für eine Dauer von 1 bis 240 min., insbesondere 5 - 60 min., bei einem Druck von 0 - 400 N/cm², insbesondere 10 - 200 N/cm², und optional unter Vakuum im Bereich von 2 - 2000 mbar, ausgeführt wird.

## Claims

1. An inlay (1) for a security and/or value document (2),
comprising a core layer (3), which contains electronic components (4) and/or diffractive security elements, and is formed of a first base polymer, the first base polymer being a thermoplastic elastomer,
comprising two inlay cover layers (4, 5), which are disposed on either side of the core layer (3) and are formed of a second base polymer that is different from the first base polymer,
wherein the core layer (3) and the inlay cover layers (4, 5) are connected to each other by way of a latent-reactive adhesive (6, 7).

2. The inlay (1) according to claim 1, wherein the core layer (3) is formed of a base polymer selected from the group consisting of "thermoplastic elastomers based on olefin (TPO), mainly PP/EPDM, e.g. Santoprene, cross-linked thermoplastic elastomers based on olefin (TPV), e.g. PP/EPDM, e.g. Sarlink (DSM), thermoplastic elastomers based on urethane (TPU), e.g. Desmopan, Texin, (Bayer), thermoplastic copolyesters (TPE), e.g. Hytrel (DuPont), styrene black copolymers (SBS, SEBS, SEPS, SEEPS and MBS), e.g. Septon (Kuraray) or Thermolast K (Kraiburg TPE), thermoplastic copolyamides, e.g. PEBA".

3. The inlay (1) according to claim 1 or 2, wherein the inlay cover layers (4, 5) are formed of a base polymer selected from the group consisting of "PC (polycarbonate, in particular Bisphenol A polycarbonate), PET (polyethylene glycol terephthalate), PET-G, PET-F, PMMA (polymethylmethacrylate), ABS (acrylonitrile butadiene styrene), PE (polyethylene), PP (polypropylene), PI (polyimide or poly-trans-isoprene), PVC (polyvinylchloride) and copolymers of such polymer".

4. The inlay (1) according to one of claims 1 to 3, wherein the core layer (3) has a thickness from 100 to 600 µm, preferably from 200 to 400 µm.

5. The inlay (1) according to one of claims 1 to 4, wherein the inlay cover layers (4, 5) have a thickness from 30 to 250 µm, preferably from 30 to 150 µm.

6. The inlay (1) according to one of claims 1 to 5, wherein one of the Inlay cover layers (4, 5) has a recess or wherein both inlay cover layers (4, 5) have recesses.

7. The inlay (1) according to one of claims 1 to 6, wherein one of the inlay cover layers (4, 5) directly carries a printing layer on the full surface or on part of the surface on the side directed toward the core layer (3) and/or on the side directed away from the core layer (3), or wherein both inlay cover layers (4, 5) respectively carry a printing layer on the full surface or on part of the surface on the side directed toward the core layer (3) and/or on the side directed away from the core layer (3).

8. A method for producing an inlay (1) according to one of claims 1 to 7 comprising the following steps:
a) a core layer (3) with embedded electronic components (4) and/or diffractive elements is produced,
b) on the core layer (3) and/or on one side of the inlay cover layers (4, 5), optionally after imprinting of at least one of the inlay cover layers (4, 5), a latent-reactive adhesive (5, 6) is applied, and
c) the core layer (3) and the inlay cover layers (4, 5) are joined and glued together, wherein the composite of core layer (3) and inlay cover layers (4, 5) optionally is heated to a temperature, which is above a reaction temperature Tᵣ of the latent-reactive adhesive.

9. The use of an inlay (1) according to one of claims 1 to 7 in a method for producing a security and/or value document (2), wherein the inlay (1) is laminated with a multitude of polymer layers (8, 9, 10, 11, 12, 13), wherein the polymer layers (8, 9, 10, 11, 12, 13) are preferably formed of the same base polymer as the inlay cover layers (4, 5).

10. The use according to claim 9, wherein, laminating is carried out at temperatures in the range from 100 to 230°C, in particular 170 to 210°C, for a time from 1 to 240 min., in particular 5 to 60 min., at a pressure from 0 to 400 N/cm², in particular 10 to 200 N/cm², and optionally under vacuum in the range from 2 to 2000 mbar.

## Revendications

1. Incrustation (1) pour un document de sécurité et/ou de valeur (2)
comprenant une couche centrale (3), qui contient des composants électroniques (4) et/ou des éléments de sécurité diffractifs, et qui est formée d'un premier polymère de base, le premier polymère de base étant un élastomère thermoplastique,
comprenant deux couches de recouvrement d'incrustation (4, 5) disposées des deux côtés de la couche centrale (3), qui sont formées d'un deuxième polymère de base, qui est différent du premier polymère de base,
dans laquelle la couche centrale (3) et les couches de recouvrement d'incrustation (4, 5) sont reliées ensemble au moyen d'un adhésif (6, 7) à réactivité latente.

2. Incrustation (1) selon la revendication 1, dans laquelle la couche centrale (3) est formée d'un élastomère thermoplastique, en particulier sélectionné du groupe consistant en «élastomères thermoplastiques à base d'oléfine (TPO), principalement PP/EPDM, p.ex. Santoprene, élastomères thermoplastiques réticulés à base d'oléfine (TPV), p.ex. PP/EPDM, p.ex. Sarlink (DSM), élastomères thermoplastiques à base d'uréthane (TPU), p.ex. Desmopan, Texin, (Bayer), copolyesters thermoplastiques (TPE), p.ex. Hytrel (DuPont), copolymères bloc styréniques (SBS, SEBS, SEPS, SEEPS et MBS) p.ex. Septon (Kuraray) ou Thermolast K (Kraiburg TPE), copolyamides thermoplastiques, p.ex. PEBA».

3. Incrustation (1) selon la revendication 1 ou 2, dans laquelle les couches de recouvrement d'incrustation (4, 5) sont formées d'un polymère de base sélectionné du groupe consistant en «PC (polycarbonate, en particulier bisphénol A polycarbonate), PET (polyéthylène téréphtalate), PET-G, PET-F, PMMA (polyméthacrylate de méthyle), ABS (acrylonitrile butadiène styrène), PE (polyéthylène), PP (polypropylène), PI (polyamide ou poly-trans-isoprène), PVC (polychlorure de vinyle) et copolymères de tels polymères».

4. Incrustation (1) selon une des revendications 1. à 3, dans laquelle la couche centrale (3) a une épaisseur de 100 à 600 µm, de préférence de 200 à 400 µm.

5. Incrustation (1) selon une des revendications 1 à 4, dans laquelle les couches de recouvrement d'incrustation (4, 5) ont une épaisseur de 30 à 250 µm, de préférence 30 à 150 µm.

6. Incrustation (1) selon une des revendications 1 à 5, dans laquelle une des couches de recouvrement d'incrustation (4, 5) a un évidement, ou dans laquelle les deux couches de recouvrement d'incrustation (4, 5) ont des évidements.

7. Incrustation (1) selon une des revendications 1 à 6, dans laquelle une des couches de recouvrement d'incrustation (9, 5) immédiatement porte une couche d'impression sur la surface totale ou sur une surface partielle sur le côté dirigé vers la couche centrale (3) et/ou sur le côté opposé à la couche centrale (3) ou dans laquelle les deux couches de recouvrement d'incrustation (4, 5) immédiatement portent une couche d'impression sur la surface totale ou sur une surface partielle sur le côté dirigé vers la couche centrale (3) et/ou sur le côté opposé à la couche centrale (3) une couche d'impression.

8. Procédé de production d'une incrustation (1) selon une des revendications 1 à 7, comprenant les étapes suivantes:
a) une couche centrale (3) avec des composants électroniques (4) et/ou des éléments diffractifs embarqués est produite,
b) sur la couche centrale (3) et/ou sur un côté des couches de recouvrement d'incrustation (4, 5), optionnellement après impression d'au moins une des couches de recouvrement d'incrustation (4, 5), un adhésif (5, 6) à réactivité latente est appliqué, et
c) la couche centrale (3) et les couches de recouvrement d'incrustation (4, 5) sont assemblées et collées, le composite de la couche centrale (3) et des couches de recouvrement d'incrustation (4, 5) étant optionnellement chauffé à une température, qui est supérieure à une température de réaction Tᵣ de l'adhésif à réactivité latente.

9. utilisation d'une incrustation (1) selon une des revendications 1 à 7 dans un procédé de production d'un document de sécurité et/ou de valeur (2), dans laquelle l'incrustation (1) est plastifiée avec une pluralité de couches polymériques (8, 9, 10, 11, 12, 13), dans laquelle les couches polymériques (8, 9, 10, 11, 12, 13) de préférence sont formées du même polymère de base, comme les couches de recouvrement d'incrustation (4, 5).

10. Utilisation selon la revendication 9, dans laquelle la plastification est réalisée à des températures comprises dans la gamme entre 100 et 230°C, en particulier 170 et 210°C, pendant un temps entre 1 et 240 min., en particulier 5 et 60 min., à une pression entre 0 et 400 N/cm², en particulier 10 et 200 N/cm², et optionnellement sous vide dans la gamme entre 2 et 2000 mbar.
